# EUROPEAN PATENT APPLICATION

(11) **EP 2 402 893 A1**
(43) Date of publication of application: **04.01.2012**
(21) Application number: 09809074.9
(22) Date of filing: 18.12.2009
(51) Int. Cl.: G06Q 10/00

(54) **SCHOOL CONTENT MANAGEMENT AND FILING SYSTEM AND METHODOLOGY**

(30) Priority: 27.02.2009 PT 09104418
(71) Applicant: Scanimagem - Comércio Internacional e Tecnologias Digitais, SA, 3885-228 Cortegaça, Ovar (PT)
(72) Inventor: DE OLIVEIRA ANTUNES, Manuel Fernando, P-3886-908 Cortegaça (PT)
(74) Representative: Ferreira, Maria Silvina
(86) International application number: PCT/IB2009/055853
(87) International publication number: WO 2010/097662

(57) **Abstract**

The present technological invention relates to a system and its method of operation for managing and storing educational content, specifically the integration and interaction between the computers used by teachers, computers used by students and other peripherals, managing and archiving all actions/activities, allowing an interactivity and interoperability between events that are being conducted in various geographic locations.

The present invention is useful to offer schools, training providers and other entities, an informatics infrastructure that creates an interactive and collaborative environment in the school's classroom/training sessions/business meetings or similar context, enhancing educational performance by introducing new technologies of information and communication applied to education.

## Description

### Technical aspects of the invention

The present invention relates to a system and its method of operation for managing and storing educational content, specifically the integration and interaction between computers used by trainers, computers used by students and other peripherals, managing, recording and archiving all actions/activities and allowing interactive collaboration in events conducted at the same site or across distant geographic locations.

### Summary of the invention

The aim of the present invention is to provide a solution for managing and storing educational institutions' electronic content.

The present invention is useful to offer schools, training providers and other entities, a digital infrastructure for interactive and collaborative management of the classroom, enhancing the educational outcome sought by the introduction of new technologies of information and communication applied to teaching and training.

The invention allows the creation of virtual learning spaces rendering the concept of a physical classroom, or similar, obsolete. The user (teacher, learner, trainee, observer, participant, etc.) can connect to the class, regardless of his/hers physical location.

The invention can also be used asynchronously, outside the classroom, allowing students/teachers/parents/etc., to access the school's public electronic content at any time, regardless of their location (according to permissions that are linked to the user's profile).

The present invention mainly describes a device server, called P/E Server, which comprises: processor, memory, data storage system, data communication system (possibly wireless), and which includes links to one or more interactive smart boards, and one or more work computers.

A preferred implementation of the present invention is characterized by the device, called P/E Server, includes one or more of the following:
- one or more mechanisms for data security, including a security fence, *firewall,* and/or a microchip encryption;
- one or more peripheral security mechanisms, in particular, using a laser detection system;
- one or more mechanisms of personal identification, in particular for radio identification (RFID), and/or biometric mechanisms, including fingerprint recognition and/or facial and/or iris and/or voice.

A preferred realization of the present invention is characterized by the device server, called P/E Server, including one or more:
- microphone;
- camera;
- video-conferencing system;
- geo-positioning system or peripheral user detection.

Another preferred realization of the present invention is characterized by the device server, called P/E Server, including one or more of the following:
- mechanized opening door and/or monitorized opening door;
- monitorized power system;
- external screen to display the server's state of operation.

Another preferred implementation of the present invention includes the following additional modules:
- structure explorer;
- control system;
- application manager and selector;
- user profile management system;
- user location management system;
- content management system;
- workgroup management system;
- dependency management system;
- audio/video conferencing system;
- content and data repositories and access system.

The present invention also describes a methodology of operating the system described above comprising one or more of the following steps allowing the management and the distribution of scholar contents using the referred server:
- authenticating and validating each user's work, through the mentioned mechanism of identification;
- recording the voice/sound of the classroom using a microphone;
- recording the work session's image using a camera;
- exchanging audio and video through the audio/video conferencing system;
- monitoring the location of each user, using the geo-positioning system;
- connecting work computers using wireless and/or wired communication systems.

A preferred implementation of the present invention comprises one or more of the following steps for content management:
- automatically distributes contents between servers, ensuring their continued availability and synchronization;
- structures content through automatic indexing, classification, version management and life cycle management;
- manages security and access levels;
- provides a central repository of information;
- provides individual repositories of information, such as personal working areas;
- integration with standard productivity tools;
- controls information flow and content;
- uses and creates predefined structures, which include contents, content templates, file structures and rules of replication;
- manages calendars and upcoming events.

Another preferred implementation of the present invention additionally comprises one or more of the following steps for applications management: authentication, authorization, reporting and information archiving, application and module installation, application software upgrades, and running applications in a secure way.

Another preferred achievement of the present invention compromises one or more of the following steps to manage applications on work computers:
- top level systems register the sub-systems;
- sub-systems ask the top level system to list all information necessary for self-installation and configuration;
- top level systems create and follow rules of trust between them, enforcing all sub-systems to only communicate with other trusted sub-systems.

A further preferred implementation of the present invention compromises one or more of the following steps to manage the individual profile of each user:
- identifying and classifying users according to their different levels of access (profiles);
- creating and maintaining attributes, electronic documents, properties and content galleries for each user;
- assigning licenses to users, including examinations or tests results.

Another even more preferred implementation of the present invention comprises one or more of the following workgroup management functions:
- share content between members of the work group, which may occur in real time or offline;
- start centralized work sessions and/or lock/unlock user's computers;
- communicating interaction, in real time, between session participants, including those occurring in interactive smart boards, without any surface limitation;
- replicating the contents of an interactive smartboard to all work session users;
- recording the attendance of work session users;
- recording the interactions that occurs in a session;
- play pre-recorded sessions;
- replicating objects between different computers;
- activating interactive objects in the work session for each individual user;
- signaling an interactive participation request, referred to as "raising hand";
- listing questions or issues noted in the smart board;
- using the replication features to present and register individual exercises;
- transmitting messages between users in order to enable collaborative work;
- automatically transcribing the vocal recordings into subtitles;
- recognizing and transcribing writing in the smart boards or individual virtual work areas to allow indexing;
- synthesizing speech for audio reproduction of contents;
- creating separate sub-groups with differential access to information;
- managing dependencies between files and content to pass just the necessary information to users;
- maintaining audit information of each transaction (who/when/what);
- enforcing all activities to be controlled by users with that capacity (teacher, trainer, etc.).
- incorporating existing content into new content;
- comprising traditional documental formats in order to build new content;
- managing users in work sessions.

Another preferred realization of the present invention comprises the following additional steps for the physical access to the server:
- dialing an access code;
- reading the user radio identification (RFID enabled) card;
- validating biometric identification of each user;
- turning off laser beams;
- activating automatic mechanisms to open the door.

### General description of the invention

The P/E Platform is an educational and training environment (scholar, corporate, etc.) and consists of a set of hardware components and solutions that enable schools, training providers and other institutions with a computing infrastructure for interactive collaboration and classroom management, enhancing educational outcomes which are desired by the introduction of new technologies of information and communication applied to education.

This platform is intended to be implemented in the classroom/training sessions/meetings or business school/etc, in order to allow the integration and interaction between computers used by teachers, students and other peripherals, such as interactive whiteboards, projectors, cameras, microphones, scanners, etc.

This platform allows you to manage and archive all actions/activities during work sessions, collectively or individually, for example, allowing filing of student's curricula for future reference.

This platform also allows for interactivity and interoperability between events that are being conducted in various geographic locations, enabling a dynamic working environment between different classrooms and between classrooms and students geographically distant.

Platform P / E consists of a mini-datacenter, mini data center, which includes several technology components, which reside in a set of application solutions that are used in the course of events / classes / training sessions / meetings as a way to ensure the objectives proposed above. This platform also allows for all content hosted there are available online (online) at any time and accessible to duly authorized users (by using traditional authentication mechanisms based on the binomial "user name / keyword).

The P/E Platform's hardware for the based on different devices interconnected, with the central element that the Mini Datacenter called P/E Server, server or P/E.

### Figure Description

In order to allow a better understanding of the invention, figures are included in annex, which represent preferential realizations of the invention. The contents of such figures should not, however, limit the object of the present invention.

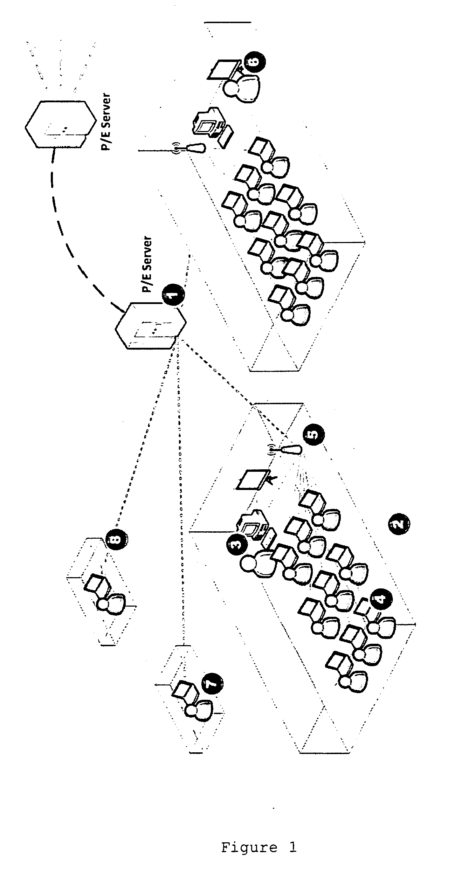

### Figure 1 - Schematic representation of the user's perspective on the system

### 1. P/E Server

The P/E Server: aggregates all forms of communication of information (static/dynamic content, documents, text, audio, video, conference, etc.) performed by the system, in the context of a work session or not; indexes, archives and acts as a distribution platform to all nodes of the platform and maintains their configuration; executes the control commands and applies and enforces security restrictions and rules of trust defined by users with sufficient privileges themselves; coordinates interactive work sessions between workgroups; serves as repository for content and document classification structures, while also allowing for their management.

The P/E Server automatically determines the necessity of updating/upgrading platform components running/stored in the user's computer and automatically updates to all those systems according to the latest system specification.

### 2. Interactive workgroup session management

Virtual and interactive work session between users, occurring in real-time and coordinated by the P/E Server. Includes the user's computers (learners, educators, assistants, etc.), without limitation of participants, and other audio/video/interactive peripherals. The P/E Server enforces all configuration structures defined by its own configuration (refer to Process Flow Diagram - 1.1 through 1.10).

### 3. User controls the workgroup management system from his computer

From his computer, the user executes the workgroup management system commands, in order to control the workgroup's virtual and interactive work session; all control commands are sent in real time to the P/E Server, which checks its internal configuration for actions to realize in that operation context and broadcasts the initial commands to all other users of that interactive work session; the P/E Server classifies, indexes and stores that information; users may also use the text/audio/video conference sub-systems to interact with other work session users.

### 4. User monitors the workgroup management system session from his computer

The user's computer receives all work session contextual control commands emitted by users and routed thru the P/E Server (see item 3, above); if unblocked, the remote user may perform those same interactive work session control commands, for which the P/E Server also performs the same command control routing as listed above (item 3) to all other work session users, guaranteeing that content/information/documents flow bi-directionally within the work session and that all parties may interact with that data.

### 5. Communication

Wireless or wired communication devices guarantee data communication between the P/E server and all other system components (user's computers, interactive boards, etc.). Those other system components may or may not be physically separate from the institution in which the P/E Server is hosted.

### 6. User instructs Workgroup Management System using the interactive whiteboard

Through an integration layer, users may perform the same commands referred in items 1 and 2, above, from the interactive whiteboard, to control the P/E platform.

### 7. User monitors the workgroup management system session from his computer

(Special case of item 4, above; please refer to that section) A user may control and interact with the platform independently of its physical location. Users which are not physically at the hosting site of the P/E Server are called Remote Users. He/she uses the workgroup management system to control interactive work sessions as if it was physically present.

### 8. Portal

User accesses the P/E platform's management and configuration sub-systems, through direct P/E Server access - refer to Process Flow Diagram (items 2.1 through 2.4).

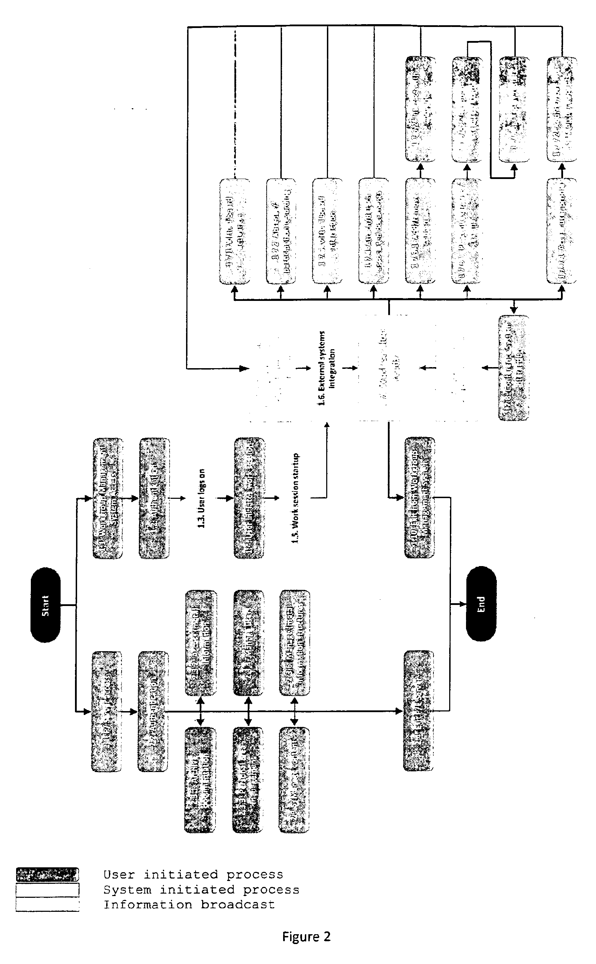

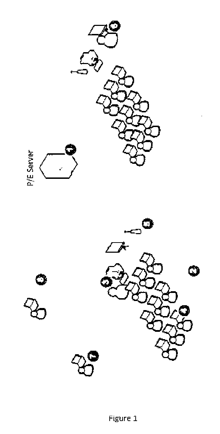

### Figure 2 - Process Flow Diagram (Schematic representation)

### 1. P/E Server access processes, through the workgroup management system

### 1.1. Workgroup Management System Access

User issues the Workgroup Management System Start control command; optionally, the Server may do it automatically when a session is created, for which the user is being requested.

### 1.2. User Authentication

User authenticates him/herself in the Workgroup Management System.

### 1.3. User Identification

Based on his credentials and matching profile, the system identifies the user and presents him with a list of possible work sessions (based on platform's configuration at that time). Optionally, the user may create a session not previously configured.

### 1.4. User Initiates Work Session

User selects a work session and initiates it.

### 1.5. Work Session Startup

The system communicates the session start command to the P/E Server. The P/E Server obtains all session metadata (list of involved participants, initial or previous session content, etc.) and creates a virtual representation of that physical work session. Session metadata may be altered by the user at any time, while the work session is being held; the P/E Server automatically forwards the session created command to all authenticated users identified as being part of the work session (through configuration); the P/E Server makes all metadata and session content available to those users.

### 1.6. External System Integration

Session information is automatically shared with relevant external systems (school ERP systems, corporate intranets, etc.), through custom integration mechanisms. This process is only realized if the platform is configured and according to the specification provided by that configuration. This process is dependent upon the availability of such external systems.

### 1.7. Virtual Board Activation

The workgroup management system is correctly initialized and the P/E Server is able to monitor, control and broadcast all user initiated actions which occur in a work session context.

### 1.7.1. Virtual Whiteboard Activation

The user may resume a previous work session, which had been previously stored in his/hers computer or archived on the P/E Server. Commanding the P/E Server, privileged users may initiate/terminate the workgroup management in other user's computers if they are part of the same work session.

### 1.7.2. Absence and Participation Recording

Privileged session users may record the physical (or virtual) absence of another user, independently of its status before the system (the user may be logged on but still be marked as absent from the work session); the P/E Server automatically forwards the user status (both physical/virtual absence and participation) to all work session users. At any given time, users may invoke a command to require contribution or participation in the work session (may be referred to as "raising the hand"); that command is routed to all users by the P/E Server and a privileged user may allow the requesting user to participate, by unblocking its work session (this command may unblock one or several users at time); that user may also restrict users from participating in the work session (non-privileged users are blocked from participating by default); finally, the privileged user may attribute a score to each user's participation individually. The P/E Server tracks and broadcasts all these commands, in real-time, to all work session participations.

### 1.7.3. Virtual Board Interaction

Privileged users create and delete virtual work areas for interaction with other users, in the context of their current work session; the user may switch between previously created virtual work areas; all users share the same virtual work areas and interact with their current virtual work area; in response to a switch virtual work area command, the P/E Server may automatically change the virtual work area for any user in the work session; privileged users may delegate work session control to any other privileged user - the P/E Server will then recognize the new user as its main controller.

Privileged users may assign specific work areas to other users or groups of users, with the intention of realizing specific collaborative work tasks (respond to questionnaires and exercises, content production and annotation, etc.). Unblocked users may use their computer and/or external interactive devices (such as interactive boards, digital pens, etc.) to add, change and remove virtual content (write, draw, add images, audio, video, etc.) from their assigned work areas, concurrently.

### 1.7.4. Attach/Detach Associated Documents

Unblocked users choose documents of relevance to the work session and attach them to the work session; the user may also remove those documents at any time.

### 1.7.5. Dynamic Content

### 1.7.5.1. Add/Remove Content

Users navigate the P/E Server archive structures and may include content located there, directly into the virtual work session. This content may come from the user's private managed content areas, public navigable structures, and/or public content galleries.

### 1.7.5.2. Interact with Content

Dynamic content included in the work session may behave dynamically, according with the work area where it's included and, also, the computer where it's running (all users share the virtual work areas, but dynamic content is allowed to recognize and interact with each specific user independently). Dynamic content may expand the system's capabilities beyond its initial capacity; when interacting with dynamic content, users may activate features that also trigger other types of non-predefined actions; dynamic content may also use the P/E Server to interact with remote users of the work session.

### 1.7.6. Collaboration

### 1.7.6.1. Present Exercises/Exams

Using the interactive and collaborative capabilities of the workgroup management system, users pose questions, layout exercises and/or start discussion threads (other collaborative scenarios are also possible).

### 1.7.6.2. Respond to Exercises/Exams

Users which are required or want to respond/contribute to exercises/discussions can do so, using their computer and the interactive and collaborative functions of the workgroup management system.

### 1.7.6.3. Display Results

If so desired, users may inspect the discussion thread or exercise resolution areas to check their result and may attribute a given score to that user's performance while resolving the problem at hand.

### 1.7.7. Work Session Management

### 1.7.7.1. Access User Profile

Privileged users access other users public profile and are presented with their public personal details and platform usage status (the definition of both "public" and "usage status" depends on the dynamic configuration of P/E Server).

### 1.7.7.2. Add/Remove Work Session Participants

After accessing their public profile, privileged users may request the P/E Server to add or remove other users from the virtual work session. The P/E Server forwards this request to those users and mandates a positive or negative response, adding those users in the affirmative case (no acknowledgment is necessary for user removal from the work session).

### 1.7.8. Conference System Interaction

The platform's real-time text/audio/video conference system is used as an auxiliary communication mechanisms and remote collaboration tool, within the work session (apart from traditional methods, which include: physical conversation, landline or mobile phone calls, email, etc.)

Privileged users control the platform's conference system; using his/hers computer, he/she may initiated and terminate a conference session within the work session. After it's activated, all other work session users may require access to the work session's conference system; privileged users are responsible for allowing or denying those requests. Privileged users also manage the focus of attention of conference sessions (who interacts with whom).

### 1.8. Workgroup Management System broadcasts interaction/activity

The P/E Server automatically broadcasts every work session activity to all work sessions users, independently of their physical location, in real-time. It also automatically indexes and archives all content produced within the work session, for future reference. That information is made available in the P/E Server's content management system (every work session object is classified individually, e.g., every text block, audio/video clip, etc.).

### 1.9. Conference System broadcasts interaction

Also in real-time, the workgroup management system's text/audio/video conference sub-system broadcasts all interaction recorded within its boundaries to all participants of the work session's conference (not all users of the work session).

### 1.10. Exit from Workgroup Management System

User issues an exit command, which is forward to the P/E Server, informing is desired to leave the work session; the P/E Server dynamically determines if the work session should be terminated or if it should continue executing.

### 2. P/E Server Information Management Processes

### 2.1. P/E Server Access

User access the P/E Server through internet or intranet connectivity.

### 2.2. Authentication

User provides his logon credentials to the P/E Server, which validates and authenticates the user credentials. The user's profile is loaded by the P/E Server, in order to customize the system's capabilities for that particular user.

### 2.3. Content Management Processes

### 2.3.1. Archive Documentation

The user is allowed to archive electronic documents of any type; when archiving a document, the system requires the user to provide sufficient metadata to classify that document in accordance to the metadata structure defined as part of the P/E Server's metadata configuration services. The system automatically stores the document in the appropriate location (once again, according to the system's configuration), versions it and, optionally, signs it with the user's digital certificate information; if so configured, the system may also initiate a set of actions (workflows) in response to that document being stored in the system (examples of actions are: sending emails, creating other documents; creating tasks for users to execute, etc.).

### 2.3.2. Access (meta) information structures

The user navigates the P/E Server's indexing and classification structures or searches its contents by inputting complex textual expressions and operators ("this and that", "this or that", "this contains that", etc.). In response to this kind of input, the server presents the list of content that matches the given criteria, independently of location. Upon discovery of the desired electronic document, the user may read, write or activate it and/or access its metadata information (creation date and user, type of document, etc.). Optionally, the user with sufficient privileges may alter the metadata associated with the given document; metadata changes will result in a re-classification of the document, which might trigger a relocation of that given object. This process might be replicated for each document version in the system.

### 2.3.3. Personal Area Management

User accesses his/hers personal area and manages his/hers personal data (access credentials, address, custom profile data, contact information, etc.) and adds/removes collaboration areas (blogs, wikis, newsletters, etc.) to interact with other users (non real-time collaboration).

A personal messaging system allows the user to send direct asynchronous messages (not in real-time) to others users and respond to messages those users send him; all messages are indexes, stored and routed by the P/E Server; the user can delete messages at a later time.

### 2.3.4. Manage Users

Privileged users (P/E Server administrators) add or remove users to the system, configure their access credentials and base profile and block or unblock them from accessing the system; the system automatically enforces the necessary security rules and access restrictions based on the user's new or changed profiles, possibly reclassifying already existent information. All sub-systems are automatically informed of this change and reconfigured accordingly.

### 2.3.5. Manage Content

Users manage content they are responsible for (which they've created or for which other content owners have relinquished its control); they add and remove content (new or different versions of old content) from their personal content gallery or from the P/E Server community driven galleries (to which privileged users control access - who can add, remove and/or change content); that content is automatically made available in the workgroup management system for dynamic inclusion in virtual work sessions; the user manages the metadata of all content in its personal galleries, while only steering the P/E Server's automatic classification infra-structure, if the content is to be made public (placed in public content galleries).

### 2.3.6. Manage (Meta) Information Structures

Privileged users configure the system's document/content classification structures by adding or removing content repositories and relocating content.

### 2.4. Exit P/E Server

The user closes his/hers P/E Server session.

### Detailed Description of Invention

The Mini-DataCenter is the centerpiece and the core of the whole P/E platform.

This is a piece of hardware that includes different electronic components that ensure the functioning of the whole P/E platform, and therefore all its sub-systems and the procedures that it implements.

Physically, this equipment is a rigid box where all electronic devices described below are mounted.

It is designed according to a set of requirements that allow its easy and intuitive installation and use.

The aim is to provide a base P/E platform as an integrated ready to use product, featuring a system that allows self-installation.

The Mini-DataCenter or P/E Server has the capacity of processing, manage content and logically file digital information.

The Mini-DataCenter contains a set of components necessary to the management of an infrastructure which mandates high security standards.

It also features remote access, in order to be remotely maintainable.

### Mini DataCenter Components

### 1 - Processing Units

The P/E Server includes a set of servers suitable for Data Centers with redundant power supplies, storage and ventilation.

### 2 - Storage units

The P/E server includes variable capacity storage, scalable and configurable according to the needs of implementation.

### 3 - Storage

The data storage is guaranteed by a storage component that allows you to have large amounts of information with redundancy. This storage component provides scalability to the P/E Platform and its hardware failures.

### 4 - Communications

The P/E Server communicates with other devices that integrate the P/E Platform with high speed networks and centralizes all communications. The hardware has a firewall that performs real time control over all transmissions, filters that traffic, according to permissions and access levels configured in the P/E Server.

### 5 - Energy

The power supply is a module (UPS) that ensures that the system is not susceptible to external power outages, and, thus, the ability to withstand electrical surges and momentary power failures.

In case of continued power failure, it will automatically shutdown the system, ensuring that information is stored before turning the system off.

The UPS is connected to the monitoring system to check the system status.

### 6 - Safety Components

### 6.1. Microphone

There is a microphone on the front of the P/E Server that allows you to check and record the presence of people. Through this feature, the P/E Server will be able to monitor the sound environment of the classroom, and also send alerts to start a conversation with the support team. The simultaneous use of voice and image allows the user to make contact with the support team, via the existing digital communication infra-structure.

### 6.2. Video Camera

The camera positioned in the Front Panel of the Mini DataCenter allows detection of movement. Once movement is detected, the system starts to record and sends the information to an external location, possible future investigation. This camera also allows to start a conversation with support teams.

### 6.3. Servomotor-equipped access door

Using a door with servomotor, it is possible to protect the access to the machines through an integrated security system, which means that the door opens only after the user has been identified.

### 6.4. RFID

The RFID system requires a technician to be positively identified, prior to any intervention. If anyone tries to access a system component while not identified, the system will immediately block itself.

### 6.5. Personal Identification System

Personal identification systems based on biometric technologies (voice, fingerprint, iris or facial recognition) can be used for personal recognition, to protect the equipment from being accessed by non authorized personnel.

### 6.6. Laser Beams

If the equipment is forced, there is a laser detection system that covers the entire perimeter of the box. The beam is invisible, but if it is traversed by any object, it emits an alarm and initiates procedures to block machine access and destructs encryption keys, making it impossible to access its configuration information.

### 6.7. Chip Data Encryption

The data stored in the system is encrypted by a chip that contains an encryption certificate. By encrypting data the information is made secure against possible attempts of theft or fraud.

### 7 - Integrated Air Conditioning Module

The air conditioning module is an optional system that is installed on top of the Mini DataCenter. All external structures are positioned to ensure that the cooling system is completely closed.

The air conditioning is extremely important so that the server can be used in locations of high heat, high levels of humidity or other adverse conditions to proper functioning.

### 8 - Soundproof boards

Allow noise emissions to be kept under control and in accordance with the standards of hygiene and safety at work.

### 9 - Monitoring, Security and Assistance

### 9.1. Monitoring

The Mini DataCenter has a specific component for monitoring; this component has the function of verifying all of P/E platform's hardware and software, allowing the immediate deployment of technical assistance.

The information about the state of the machine is available on an external display located in the exterior of the P/E Server.

By monitoring indicators, it's possible to identify the operational status of the machine, enabling preventive maintenance and optimization of resources/performance.

All monitoring records can be centralized, in order to be analyzed remotely via public or private communication networks.

### 9.2. Assistance

Assistance may be local or remote.

By using the external screen on the Mini DataCenter, the user can submit a direct request for technical support.

The user can choose to provide the support technician with the remote equipment usage and monitoring records (logs), so that he can better analyze the problem.

By using the external screen, camera and microphone built in the machine, it is possible for a user to interact with the remote support team and simultaneously proceed with the instructions for correcting anomalies.

### 9.3. Security

The physical access to the P/E Server can be made with different degrees of security clearence, according to the following procedure:
The technician will physically access the P/E Server and will insert his personal code on screen, to acquire access to a secondary identity matching mechanism. If the code is correct, the system will require the technician to input his/hers credentials through the personal identification system (biometric or other).

After confirming the technician credentials, the Mini-DataCenter door will open and the laser detection system will be turned off.

### II - Peripherals that interact with the P/E Server

### 1 - Interactive Boards

Interactive smart boards are integrated with the P/E Server as external peripherals that are part of P/E Platform.

The Interactive smart boards are interconnected with a control computer that will ensure the authentication and integration with the P/E platform through a set of identification elements composed of a *username* and *password,* or alternatively, a biometric recognition system.

### 2 - Work Computers

The work computers are connected to the P/E Server through a *wireless* network or via an internet connection.

Regardless of the location of the machines, they will always have to be authenticated before the P/E Platform so that they can access the system.

Using the P/E Platform's Command System (see below) each user is validated and all the features to which he has access are available automatically.

### 3 - Microphone

Using a microphone, it's possible to record work session sound. For instance, a teacher may record the class so that it might be heard again later by his students.

### 4 - Camera

Using a camera enabled device, an entire work session can be recorded and replayed at a later time.

### 5 - Video Conference System

Electronic system that enables the capture and dissemination of text, sound and image in real time, used also to record and store all interaction between the various users of the P/E Platform.

### 6 - User Geo-Positioned Location System

The system monitors user location through geo-positioning enabled access card usage and emits alerts (sound, email, etc.) when location boundaries are exceeded.

### 7 - Access point

By using Access Points it is possible to integrate all the components in the network without the need for wires to link the physical infrastructure of the P/E Platform.

### 8 - Other Peripherals

The entire platform is designed to grow and integrate new components, such as peripherals tailored to handicapped individuals.

### III - Logic Infrastructure

### 1 - P/E Platform Network

All of the P/E Platform is designed in a distributed way, allowing new nodes to be added, creating a distributed network where rules of trust and responsibility can be defined to enforce virtual boundaries. Each node of this network is called P/E Platform Command System.

P/E Platform network is formed by all connected Command Systems.

### 2 - Distributed Communication

Messages are routed between network nodes, and all communication must flow between the P/E Server and the appropriate P/E Platform Command Systems.

### 3 - P/E Platform Administration

The P/E Platform's Management System is responsible for enabling capabilities such as: managing users, creating user groups, configuring the accessibility and extensibility functions, installing sub-systems, etc.

It is also this system that defines the rules of trust between users of the P/E Platform, allowing the creation of structured networks.

### 4 - Content Management System

The P/E Platform includes a Content Management System that provides:
A Notification Control System for content changes - a System for Automatic Content Distribution between servers, which ensures that contents are continuously synchronized between different platforms, allowing optimized and local access to contents.

The Content Management System is a structured, classified and indexed mechanism, allowing efficient information searches, document versioning and also life cycle management, audit and tracking for each individually stored data unit (content/electronic document).

The Access Control System allows the sharing of information across different users in a fully secure environment.

It allows the creation of virtual workspaces and provides users with a personal work area, so it is unnecessary to save documents locally until the document is complete; all documents are guaranteed to remain available on the P/E Platform, for their entire lifetime, surviving local data corruption and loss of information (accidental deletion, for instance).

Through integration with the Microsoft Office platform or other WebDAV enabled tools productivity can be increased.

### 5 - Integration

P/E Platform was designed with an open architecture to allow the subsequent integration of new systems.

By using the Interactive Workgroup Management System it is possible to integrate interactive contents, such as educational games, educational quizzes, dynamic meeting agendas, to-do lists, etc.

The P/E Platform comprises a set of Development Applications Tools that allow the creation of more dynamic content, which may be made available directly on the P/E Platform.

### 6 - Internationalization

The P/E Platform supports several languages and may be configured to support any other.

### IV - Procedures Implemented by the Platform

### 1 - Official Guides in Digital Mode/ Collaboration Platform

The P/E Platform also provides a set of collaboration tools such as:
- Blogs
- Wikis
- Forums
- Notifications
- Alerts
- SMS
- Newsletters
- News
- Calendars and Events

### 2 - Structure Explorer

This system allows to create, index, use of models and storage in structures of complex contents in a simple and direct way.

The Structure Explorer also includes an automatic structure generator, called Structure Generator sub-system. This system allows replication of content and file structures previously defined through rule-based replication.

### 3 - P/E Platform Command System

The P/E Platform Command System ensures that all components have the functionality needed to authenticate, authorize, report, store information, install and run applications and modules and upgrade itself.

The top-level Command Systems have the ability to register other sub-system commands. The sub-systems request the top-level Command System all the information needed to know how to self-install and customize themselves according to their credentials and functions.

This is the only system component that has to be initially available on any computer before it is connected to the P/E Platform.

The top-level Command Systems have the ability to create rules of trust between them. They enforce communication rules between sub-systems, in order to create a fully secure network of components.

Execution of each of the P/E Platform application components is guaranteed by the Command System.

### 4 - Application Selector

The P/E Platform has its own system of software component installation, upgrade, initialization and execution.

Application Selectors also serves as an entry point to the Application Store and the System Application Launcher of the P/E Platform's Command System.

### 5 - My Profile

The Profile Management System (My Profile) is completely extensible, by allowing the dynamic creation of properties to identify users.

Each user's profile supports the definition of public and private data and who as access to that data. P/E Platform access levels' can be customized per user profile.

The Profile Management System software component allows privileged users to access and maintain the user profile pool and offers users the necessary functionality to manage their own profile.

Examples of public profile information include: personal interests, birthday date, internet contact information, etc. The Profile Management System also allows the creation of customizable "social" areas or pages that allow visualization of the user's public profile information in a user friendly environment.

The Allocation System Certificate of Competence allows schools to create certificates that are forever associated with the student's profile. For example you can have a certificate indicating that the student passed a particular exam or test.

These certificates, as all other properties of the profile of the P/E Platform can be exported between systems and monitor its user where the profile is sent to other platforms P/E.

### 6 - My Location

The My Location System is based on the use of geo-located cards.

This system lets privileged users know where other users of the P/E Platform are physically located, by using a system of individual cards that send physical location information to the P/E Platform.

The system automatically emits alerts when users move to external locations or inside/outside configured coverage areas.

The Alert Registration System allows users or software components to be configured as recipients of alert messages whenever certain events happen.

### 7 - My Gallery

The My Gallery System is integrated with the Workgroup Management System and allows the creation of content gallery that can be used in the context of the Workgroup Management System virtual work sessions.

This system may include either or all of: pre-defined content, user generated content or third-party custom developed content.

### 8 - Application Store

The Application Store is the System that allows the delivery of applications to users.

This System archives and indexes all applications and functionalities that the user has access according to his particular profile.

### 9 - Interactive Workgroup Management System

The Workgroup Management System is the system that enables real time management and sharing of content between P/E Platform users, storing all exchanged information for offline distribution and use later use.

Creation of a Workgroup Management System work session allows for multiple users (e.g., students) to work on the same information, while the work session is being controlled by other privileged users (e.g., teacher).

The Workgroup Management System has the ability to start distributed work sessions among different users according to their different profiles.

Privileged users (e.g., teachers) may force the execution of the Workgroup Management System on other users (e.g., students), according to their profile per work session.

This system is managed by the P/E Platform and allows immediate, managed, real time interaction, between various peripherals that may be connected to the P/E Platform (e.g., web cameras, interactive smart boards, etc.).

This system has a storage component that is integrated with the metadata management system and which indexes all content generated in the work session, as well as managing its logical location within the P/E Server Storage System.

The metadata system is extensible, allowing new components to extend document/content classification properties.

The Workgroup Management System allows work session privileged users to request remote participation from other work session users. The contrary is also true.

All interactions between Workgroup Management System are recorded for auditing, which also allows replaying the work session at a later time.

The Workgroup Management System is extensible with new functionality and features according to the context in which it is working (ex. workshops, lectures, training sessions, etc.).

Computers of users in a Workgroup Management System work session can be are locked and unlocked remotely from a privileged user's computer.

Work sessions have an infinite content area available. Zoom and pan functionality allow for the entire content area to be made available.

As said, the Workgroup Management System may include interactive and dynamic content, which may provide users with enhanced functionality. That content and any actions it triggers in the work session context will be replicated in real-time to all other work session users. Content may interact with other content, participants (through any input method available on the user's computer) and any other of the platform's software components (if so allowed by the platform's configuration).

The system is agnostic to the user's location, which permits remote work session access through an Internet connection.

The system of audio and video recording and streaming allows users who are attending class remotely to listen and act as if they were physically present.

The Speech Recognition System allows automatic transcription of what is being captured in the user's computers audio input devices, in any physical location, to the work session. Synthesized speech can also be constructed and broadcast, from text written in a work session.

The creation of user groups within the Workgroup Management System' work session enables separate working groups to have separate access to information, within the context of a work session.

### 10 - File Formats

XML is the basic content registration format. This means that various application development tools may be used to access produced content.

Additionally, the P/E Platform allows storing and indexing of contents regardless of its format (based on the Metadata Management System).

Also, the Workgroup Management System may include content in several formats, either as an attached document or virtual content include directly into the work session.

### 11 - Dependency Management System

This system allows the management of dependencies between the P/E Platform's components.

This system allows replication of dependent files without massive information replication, by continuously monitoring the status of the components previously installed.

### 12 - Application Storage System

This system is responsible for managing the storage of all applications that ensure the functioning of the P/E Platform.

### 13 - Application Development Toolkit

P/E Platform contains a set of application development tools that allow new applications to be developed and integrate with existing ones.

The development tools of the P/E Platform also allow the development of contents that can be continuously incorporated into the Workgroup Management System and replicated in real time to all users.

## Claims

1. School Content Management and Storage System **characterized by** including a server (P/E Server) composed by:
a. A processor and data memory;
b. data storage;
c. mechanism for data communications (possibly wireless);
and also including:
a. one or more interactive smart boards;
b. one or more work computers.

2. According to the previous claim, a system **characterized by** the fact that the server (P/E Server), additionally incorporates one or more of the following:
a. one or more mechanisms for data security, including a security barrier, firewall, and/or a microchip encryption;
b. one or more secondary security mechanisms, in particular, a laser detection mechanism;
c. one or more mechanisms of Personal Identification, in particular, by radio identification (RFID), and/or biometric mechanisms (fingerprint recognition and/or facial recognition and/or iris recognition and/or voice recognition).

3. According to any of the previous claims, system **characterized by** the server device (P/E Server), including one or more of the following sub-systems:
a. microphone;
b. camera;
c. text/audio/video-conference sub-system;
d. geo-positioned user detection sub-system.

4. According to any of the previous claims, system **characterized by** a server device (P/E Server), including one or more of the following:
a. mechanized and/or monitored door locking system;
b. monitored power system;
c. external screen to display the server's operational status.

5. According to any of the previous claims, system **characterized by** the server device, called P/E Server, including one or more of the following modules:
a. Structure Explorer;
b. Control System;
c. Application Manager and Selector;
d. User Profile Manager;
e. User Location Manager;
f. Gallery Manager;
g. Workgroup Management System;
h. Dependency Management System;
i. Repository and Application Storage System.

6. The operation methodology of the system described in any of the previous claims is **characterized by** including one or more of the following steps for the management and distribution of educational content through the referred server device:
a. authentication and validation of each of the users and work computers, through the mentioned mechanisms of identification;
b. recording classroom sound using a microphone;
c. recording classroom images using a video camera;
d. exchanging audio and video using the audio/video-conferencing sub-system;
e. monitoring the location of each user using the geo-positioning sub-system;
f. providing inter-connection to work computers using wireless or wired communications sub-systems.

7. Operation methodology of the system described in any of the previous claims is **characterized by** including one or more of the following steps in the Content Management System:
a. automatically distributes content between servers, ensuring their continued availability and synchronization;
b. manages content indexing and classification, version management and life cycle tracking;
c. manages security and access levels;
d. provides a central information repository;
e. provides individual repositories of information, referred to as personal work areas;
f. integrates with standard productivity tools;
g. uses and creates templates for predefined contents;
h. controls the flow of information/content;
i. manages metadata control structures, which include content, templates, file structures and rules of replication;
j. manages calendars, events and task-lists.

8. According to any of claims 6 to 7, **characterized by** including one or more of the following for Application Management:
a. authentication;
b. authorization;
c. reporting and content archiving;
d. installing and running applications and modules;
e. software updates.

9. According to any of claims 6 to 8, methods **characterized by** including one or more of the following steps for Application Management on work computers:
a. sub-systems are registered by top-Level systems;
b. sub-systems ask the top-level system to list all the information necessary for self-installation and configuration, including credentials and their functions;
c. top-level systems create and follow rules of trust between them, which allow sub-systems to communicate with each other, only allowing each system to communicate with systems with whom it has a trustful connection.

10. According to any of claims 6 to 9, methodology **characterized by** including one or more of the following steps to manage each user's individual profile:
a. identify each user according to his/hers profile and access level;
b. create and maintain attributes, properties, contents and private content gallery for each user;
c. manage and distribute digital certificates to users.

11. According to any of claims 6 to 10 **characterized by** including one or more of the following steps to manage work groups:
a. shares contents or information between group members, in real time and with offline support;
b. start centralized work sessions for members and/or lock and/or unlock work computers;
c. communicating interaction between users in real time, including those occurring in interactive white boards, without virtual work area restrictions;
d. record members' attendance and participation;
e. record interaction occurred during a work session;
f. playing pre-recorded work sessions;
g. replicating content between different computers;
h. activating interactive content in the work session of each individual user;
i. activating and signaling interactive participation requests (also known as "raising hand");
j. using the virtual work session to take notes;
k. using the virtual work session replication, placing and registering individual exercises;
l. transmitting messages between users in order to enable collaborative work;
m. automatically transcribing vocal records and transmitting its transcription as subtitles;
n. recognizing, transcribing and indexing written text during the virtual work session;
o. reproducing content written text through synthesized speech;
p. creating user groups with different information access levels;
q. managing dependencies between files and contents, in order to broadcast content between work session users;
r. maintaining audit information of each operation, including who performed the operation, when the operation took place and what was executed as part of the operation;
s. allowing privileged work session users to control all activities of non-privileged users;
t. incorporating already existent content into new contents;
u. incorporating standard document formats into new content;
v. managing users in a work session.

12. According to any of claims 6 to 11, a methodology **characterized by** including the following steps to physically access the P/E Server:
a. dialing an access code;
b. validating a, possibly radio-signal enabled (RFID), personal identification card
c. validating secondary identification credentials, such as those provided by biometric identification systems;
d. disabling all security mechanisms, upon valid identification;
e. allowing physical access to the server, by opening the automatic locking mechanism.
